# EUROPEAN PATENT SPECIFICATION

(11) **EP 0 874 551 B1**
(45) Date of publication and mention of the grant of the patent: **19.03.2003**
(21) Application number: 96944041.1
(22) Date of filing: 19.12.1996
(51) Int. Cl.: A21D 6/00, A21D 13/08

(54) **READY-TO-BAKE PARPROOFED LAMINATED DOUGHS**
BACKFERTIGER BLÄTTERTEIG
PATE FEUILLETEE PRETE A CUIRE

(30) Priority: 16.01.1996 EP 96200095
(43) Date of publication of application: 04.11.1998
(73) Proprietor: CSM Nederland B.V., 1112 XE Diemen (NL)
(72) Inventor: VAN DER BEEK, Marius Unilever Research, NL-3133 AT Vlaardingen (NL); DE BOER, Hendrikus, Bauke Unilever Research, NL-3133 AT Vlaardingen (NL); LEVOIR, Mathias, F-92842 Rueil-Malmaison Cédex (FR); WEISENBORN, Petronella, Clementia, Maria, 3133 AT Vlaardingen (NL)
(74) Representative: Jorritsma, Ruurd
(86) International application number: EP9605757
(87) International publication number: WO97025869

(56) References cited:
- EP-A- 0 114 450
- EP-A- 0 542 353
- WO-A-93/22928
- WO-A-95/17099
- PATENT ABSTRACTS OF JAPAN vol. 95, no. 011 & JP 07 289144 A (SHINKA SHOKUHIN KK), 7 November 1995,

## Description

In order to come to a more convenient dough-system, that enables a baker to prepare a dough on one day and to bake a dough-product made from it on a later day, several solutions have been given in the prior art.
In our European Patent 493,850 we have disclosed preproofed, frozen croissants that can be baked without thawing, that contain a gelatin-relating compound. Similar products, however containing pectin in stead of gelatin are disclosed in EP 542,353. Above products however, mean that a full proofing-process has still to be performed resulting in frozen, proofed dough-systems that are very vulnerable during transportation. Moreover the total volume that must be transported is relatively high for such fully proofed doughs. Also these products are very sensitive for temperature abuse. This means that the quality of the products is reduced, when the products are subjected to temperature variations during storage.

An even more convenient solution has been disclosed for dough systems that contain a leavener, such as yeast, but that do not need to be preproofed. After freezing of the dough-system it is said to be possible to obtain baked products with good specific volume and ovenspring without thawing and proofing of the dough system prior to baking. E.g. in WO 92/18010 or DE 4,118,024 laminated dough-systems are disclosed, wherein a dough is made from flour, yeast and liquid, the dough is kneaded and laminated with fat. Essential is that the fat is not present in the dough, but is only incorporated in the laminated product as laminate-fat. Another essential feature of the products and the process is, that the number of fatlayers present in the laminated dough, is increased with 10 to 50%, compared with the normal number of 12 to 36 fatlayers present in the conventional laminated dough-systems. Simultaneously the amount of yeast applied is 10-50% higher than conventionally applied. We found that above process leads to products that display slightly better specific volumes and ovenspring than products made according to the more conventional techniques. However, the s.v. and ovenspring of the products were still inacceptably low for the baker and the consumer. Another solution was presented in EP 561,702. According to this patent-application ready-to-bake frozen croissants were made, wherein the total amount of fat-layers was greater than 50. Those products can contain three additives, i.e.
- an acidifier
- a thickener or gelatinizing agent
- a lipolytic enzyme.

As examples of the thickeners and gelatinizing agents are mentioned: carboxymethyl cellulose (also illustrated in the example), guar gum, xanthan or alginate. We found that products made according to this EP-application did not yet meet the standards set by the baker and the consumer.

According to our WO 95/17099 ready-to-bake, frozen, laminated doughs can be made that display upon baking (without thawing and proofing) an ovenspring of at least 2.2 ml/g (using: 50 gram product). The products obtained after baking display specific volumes of at least 3.5 ml/g (again using: 50 gram product). Such products can be obtained, when the flour-component of the dough is constituted of two components, i.e. 1) of a natural flour and 2) of an artificial flour. The artificial flour being composed of a protein, in particular a gelatin-relating compound and a modified starch.

So this WO 95/17099 discloses ready-to-bake, frozen, laminated dough, comprising consecutive layers of dough and fat, wherein the dough comprises:
- a flour-component, and (on flour):
   45 - 70 wt% of water
   5 - 10 wt% of yeast
   0.1 - 4.0 wt% of emulsifier
wherein the flour-component is composed of:
80 - 99 wt% of natural flour and
20 - 1 wt% of "artificial flour"
and wherein the artificial flour consists of:
30 - 70 wt% of a protein, in particular a gelatin-relating compound and
70 - 30 wt% of a modified starch,

while the laminated product contains 8-80, preferably 16-60 fatlayers and the total fat-content of the product (on flour) is 35-85 wt%.

Proteins that can be used in above products are gluten, whey-proteins, egg-proteins and caseinates and mixtures thereof.

Very suitable products are obtained, when a gelatin-relating compound is applied, in particular if selected from the group, consisting of: gelatin with a bloom-rate of 50 - 400; non-gelling gelatin with a bloom-rate of 0 - 50; hydrolyzed gelatin and gelatin-precursors, such as collagen.

The starch-component of above artificial flour must be a modified starch. Preferred modified starches are the heat-stable modified starches, in particular the cross-linked starches. A typical example being a cross-linked waxy maize starch, this starch can either be pregelatinized or not. Suitable modified starches that are mentioned are:
Ultratex-2, Instant Clearjel, Pureflo, Thermflo, National 780188, Firmtex, Hiflo, National Frigex, National Frigex HV, National Frigex L.V.; Purity VL, Collflo 67, Purity HPC, Thermtex (all from National Starch); Clearam CH-30 (from Roquette) and from Avebe the Farinex-type products:
VA 70; VA 100T; CAX;TK-1; VA 70 C or CA. Preferred modified starches are derived from waxymaize or from tapioca.

Although above products display very acceptable product properties after baking in particular with respect to specific volume and ovenspring, we found that the appearance of these products was not optimal. It was further found, that by applying our invention a product could be obtained after baking, that combined even higher specific volumes than obtainable according to WO 95/17099 with a better appearance and better internal structure.

From EP 114,450 and US 4,450,177 it is known, that the specific volume of a bread, baked from a frozen dough can be improved by carefully controlling the specific volume of the bread dough before baking. It was found, that by using specific volumes of 1.76 - 3.08 ml/g for the frozen doughs, positive ovensprings could be achieved. Although gums can be part of the dough composition, nothing is disclosed about the use of pectins. This document does not disclose how products can be obtained with the combination of advantageous product properties, as we achieve with our invention.

The problems related with temperature cycling at cold storage are known for bread doughs from US 4,966,778. According to this US patent these problems were solved by using protein levels of more thean 17 wt% in the flour component of the doughs. However, it cannot be derived from this document whether this solution does also work for laminated doug-systems.

According to EP 145,367 the specific volume of baked frozen laminated products could be improved by applying parproofing such that an increase in specific volume of at least 55% is achieved om dough volume.

Nothing is disclosed about the problems related with temperature sensitivity, while also nothing is said about the use of a gum.

We now found that ready-to-bake, frozen, parproofed laminated doughs can be obtained, that result upon baking in laminated products with excellent specific volume, ovenspring, appearance and internal structure and which also display an improved cold storage capacity, so that above properties remain excellent even when the products were stored at low temperature prior to baking.

Therefore, our invention concerns:
ready-to-bake, frozen, parproofed laminated dough, comprising consecutive layers of dough and fat, wherein the dough comprises:
   - flour, and (on flour):
      45 - 70 wt% of water
      5 - 12 wt% of yeast
      0.1 - 4.0 wt% of emulsifier
      0.2 - 5 wt%, preferably 0.8 - 2.5 wt% of a pectin
      0 - 10 wt% of a protein, and
      0 - 10 wt% of a modified starch,
      while the laminated product has been parproofed, so that the specific volume of the frozen, parproofed, laminated product is less than 1.7 ml/g, in particular 1.2 - 1.5 ml/g and contains 8-128,
      preferably 16-60, more particularly 32-48 fatlayers and the total fat-content of the product (on flour) is 35 - 85 wt%.

It was found, that the use of pectins, more specifically high methoxy pectins, i.e. pectins from which at least 50% of the available carboxylate groups are converted to methoxy groups, led to products with the best cold temperature stability the best appearance and the best open structure in the baked products. The protein component and the modified starch, that we can apply in our new products are identical to those disclosed above with respect to WO 95/17099. Suitable amounts are 0.5 - 8 wt%, however very good results can also be obtained in the absence of these components.

Although any emulsifier can be applied, we found that suitable emulsifiers are mono- and diglycerides; acetic, lactic, citric, tartaric and diacetyl tartaric acid esters of mono- and diglycerides; polyglycerol esters; propylene glycol esters; stearoyl-2-lactylic esters; sorbitan esters and others. We found that a very beneficial effect on product performance is obtained, when the emulsifier comprises
- a DATA -ester, that provides baking performance to the dough, or
- a lecithin, or
- mono fatty acid esters from sucrose, wherein the fatty acids have a chain length of 12-20 C-atoms, or
- mixtures thereof.
The DATA-ester and the mixture with the lecithin provide in particular improved appearance to the baked products. Very suitable DATA-esters are those, that have a low saponification value (sap. value < 450).

The lecithin can be any known sort of lecithin, however, it is preferred to use lecithins that have a high phospholipid-content.

Other dough-improving ingredients, such as sugar, fat, enzymes, in particular xylanase and/or glucoamylase, and/or transglutaminase and/or amylase, ascorbic acid and reducing agents, such as cysteine can also be incorporated in the dough. The amounts are effective amounts, which can be derived from the prior art. Ascorbic acid is used in slightly higher amounts of more than 100 pppm (on flour).

Very suitable laminated doughs, with very good product-performance are obtained, when we apply a specific ratio between fat-content (in % on flour) and number of fat-layers. In fact we found that ratio's of 0.6 - 1.5 lead to very good results.

The flour component of our doughs can be any flour, applicable according to the prior art in laminated dough systems. Preferred flours are strong flours, in particular the flours with at least 15 wt% protein on dry matter are preferred.

Our new laminated dough systems can also be filled with fillings, such as custards, marmalades, fruit, ham, cheese or chocolate. However, in order to avoid problems with the readiness of the baked products, it is suitable to apply fillings with a reduced water-content and/or to add a food-grade waterbinder to the filling. Very convenient fillings comprise custard-fillings with a water-content of 50-65 wt%, marmalade-fillings with a water-content of 45-70 wt%, while these fillings also can contain 2-15 wt% of a waterbinder, selected from the group, consisting of gelatin, egg-white powder, starches, modified starches, flour, carrageenan, guar gum. Custard-fillings will contain preferably 9-15 wt% of these waterbinders, while the marmalades preferably will contain 2-8 wt% thereof. The filling-material can be applied as a pourable filling or as a frozen filling, in particular in the form of a frozen stick.

The ready-to-bake, frozen parproofed laminated doughs, according to our invention, produce upon baking in a convection oven for 25 minutes at 175°C a product with a specific volume (s.v.) of at least 3.5 ml/g, preferably at least 5 ml/g; in particular at least 6 ml/g. Ovensprings, achieved during above baking of the frozen products, are at least 2.2 and most preferably at least 4.5 ml/gram.

### Examples and comparative examples

### Recipes:

### According to invention

| | | Comp. ex. | Comp.ex |
|---|---|---|---|
| | | I | II |
| Flour: and on flour | 100 % | 100 % | 100 % |
| Water | 57.5 % | 55.0 % | 57.5 % |
| Salt | 1.7 % | 1.7 % | 1.7 % |
| Yeast | 9.5 % | 9.5 % | 9.5 % |
| Pectin Freeze | | | |
| (Hercules): | 1.2 % | - | - |
| Xanthan | - | - | 0.8 % |
| Sugar | 9.0 % | 9.0 % | 9.0 % |
| Gluten | 1.0 % | 1.0 % | 1.0 % |
| Fat | 0.1 % | 0.1 % | 0.1 % |
| Ascorbic acid | 0.01 % | 0.01 % | 0.01 % |
| Enzymes | 0.03 % | 0.03 % | 0.03 % |
| Emulsifier | 0.5 % | 0.5 % | 0.5 % |
| Rework | 20 % | 20 % | 20 % |
| Laminate-margarine: | 40 % | 40 % | 40 % |

### Procedure

A premix was made (without yeast, enzymes and flour). The flour was added and the mixture was mixed in a Eberhart-mixer. The enzymes were dissolved in water and this solution and the yeast were added to the premix. The dough was kneaded (2 min. slow; 9 min. fast). The final dough temperature was 20 °C.

The lamination procedures was as follows:
- 1 turn in 4
- 30 min. rest at 15°C
- 1 turn in 4
- 1 turn in 3
- rolling until 2.75 mm
- cutting of sample of 21 x 10 cm
- moulding of croissants
- fermentation for 40 min. at 32°C and 75 % RH
- freezing until -20°C in 1 hour

Baking in convection oven at 175°C; 25 min. The baking was performed on products kept at -20°C for 10 weeks and subsequently warmed up to -10°C and frozen to -20°C with time intervals of 24 hours. The results are given in the table.

**Table**

| **Recipe** | **Cold storage conditions** | **sv frozen** | **sv baked** | **oven- spring** |
|---|---|---|---|---|
| acc. to invention | 10 w -20°C | 1.3 | 7.4 | 6.1 |
| acc. to invention | 10 w -20°C + 2 cycles -10/-20 | 1.2 | 7.4 | 6.2 |
| comparative I | 10 w -20°C | 1.3 | 6.6 | 5.3 |
| comparative I | 10 w -20°C + 2 cycles -10/-20 | 1.2 | 6.9 | 5.7 |
| comparative II | 10 w -20°C | 1.2 | 7.1 | 5.9 |
| comparative II | 10 w -20°C + 2 cycles -10/-20 | 1.2 | 6.5 | 5.9 |

## Claims

1. Ready-to-bake, frozen, parproofed, laminated dough, comprising consecutive layers of dough and fat, wherein the dough comprises:
- flour, and (on flour):
45 - 70 wt% of water
5 - 12 wt% of yeast
0.1 - 4.0 wt% of emulsifier
0.2 - 5 wt% of a pectin
0 - 10 wt% of a protein, and
0 - 10 wt% of a modified starch,
while the laminated product has been parproofed, so that the specific volume of the frozen, parproofed, laminated product is less than 1.7 ml/g, in particular 1.2 - 1.5 ml/g and contains 8-128, preferably 16-60 fatlayers and the total fat-content of the product (on flour) is 35 - 85 wt%.

2. Ready-to-bake, frozen, parproofed, laminated dough according to claim 1, wherein the pectin is a high methoxy pectin, in particular having at least 50% of the carboxylate groups being converted to methoxygroups.

3. Ready-to-bake, frozen, parproofed, laminated dough according to claims 1-2, wherein the emulsifier comprises:
- a DATA -ester, that provides baking performance to the dough, or
- a lecithin, or
- mono-fatty acid esters from sucrose, wherein the fatty acids have a chain length of 12-20 C-atoms, or
- mixtures thereof.

4. Ready-to-bake, frozen, parproofed, laminated dough, according to claims 1-3, wherein the dough further comprises one or more of the following ingredients: sugar, fat, enzymes, in particular xylanase and/or glucoamylase, and/or transglutaminase, and/or amylase, ascorbic acid and reducing agents, in particular cysteine.

5. Ready-to-bake, frozen, parproofed, laminated dough according to claims 1-4, wherein the ratio between fat-content (in % on flour) and number of fat-layers present ranges from 0.6 - 1.5.

6. Ready-to-bake, frozen, parproofed, laminated dough according to claims 1-5, which laminated dough produces upon baking in a convection oven for 25 minutes at 175°C a product with a specific volume (s.v.) of at least 3.5 ml/g, preferably at least 5 ml/g; in particular at least 6 ml/g.

7. Ready-to-bake, frozen, parproofed,laminated dough according to claims 1-6, which laminated dough displays upon baking in a convection oven for 25 minutes at 175°C an ovenspring of at least 2.2, in particular at least 4.5 ml/g.

8. Ready-to-bake, frozen, parproofed, laminated dough according to claim 1-7, wherein the laminated dough is filled with a filling with a reduced water-content and/or with an increased content of a food-grade waterbinding agent, the filling being in particular a custard, marmelade or fruit-filling.

## Patentansprüche

1. Backfertiger, gefrorener Blätterteig mit aufeinanderfolgenden Schichten aus Teig und Fett, wobei der Teig folgendes umfaßt:
- Mehl und (auf Mehl):
45-70 Gew.-% Wasser
5-12 Gew.-% Hefe
0,1-4,0 Gew.-% Emulgator
0,2-5 Gew.-% eines Pectins
0-10 Gew.-% eines Proteins, und
0-10 Gew.-% einer modifizierten Stärke,
während das Schichtprodukt vorgeprüft wurde, so daß das spezifische Volumen des gefrorenen, vorgeprüften Schichtprodukts geringer als 1,7 ml/g, insbesondere 1,2 - 1,5 ml/g ist und 8-128, vorzugsweise 16-60 Fettschichten enthält und der Gesamtfettgehalt des Produkts (auf Mehl) 35 - 85 Gew.-% beträgt.

2. Backfertiger, gefrorener Blätterteig nach Anspruch 1, wobei das Pectin ein Pectin mit hohem Methoxygehalt ist, insbesondere wobei mindestens 50% der Carboxylatgruppen in Methoxygruppen umgewandelt sind.

3. Backfertiger, gefrorener, vorgeprüfter Schichtteig nach den Ansprüchen 1-2, wobei der Emulgator folgendes umfaßt:
- einen DATA-Ester, der eine Backleistung für den Teig vorsieht, oder
- ein Lecithin, oder
- Monofettsäureester aus Saccharose, wobei die Fettsäuren eine Kettenlänge von 12-20 C-Atomen aufweisen, oder
- Gemische davon.

4. Backfertiger, gefrorener Blätterteig nach den Ansprüchen 1-3, wobei der Teig ferner einen oder mehrere der folgenden Bestandteile umfaßt: Zucker, Fett, Enzyme, insbesondere Xylanase und/oder Glucoamylase und/oder Transglutaminase und/oder Amylase, Ascorbinsäure und Reduktionsmittel, insbesondere Cystein.

5. Backfertiger, gefrorener Blätterteig nach den Ansprüchen 1-4, wobei das Verhältnis zwischen dem Fettgehalt (in % auf Mehl) und der Anzahl von Fettschichten im Bereich von 0,6 - 1,5 liegt.

6. Backfertiger, gefrorener Blätterteig nach den Ansprüchen 1-5, wobei der Blätterteig nach dem Backen in einem Konvektionsofen für 25 Minuten bei 175°C ein Produkt mit einem spezifischen Volumen (S.V.) von mindestens 3,5 ml/g, vorzugsweise mindestens 5 ml/g; insbesondere mindestens 6 ml/g erzeugt.

7. Backfertiger, gefrorener Blätterteig nach den Ansprüchen 1-6, wobei der Blätterteig nach dem Backen in einem Konvektionsofen für 25 Minuten bei 175°C einen Ofensprung von mindestens 2,2, insbesondere mindestens 4,5 ml/g zeigt.

8. Backfertiger, gefrorener Blätterteig nach Anspruch 1-7, wobei der Blätterteig mit einer Füllung mit einem verringerten Wassergehalt und/oder mit einem erhöhten Gehalt an einem Wasserbindemittel mit Nahrungsmittelqualität gefüllt ist, wobei die Füllung insbesondere ein Vanillepudding, eine Marmelade oder eine Fruchtfüllung ist.

## Revendications

1. Pâte prête à cuire, congelée, partiellement levée, laminée, formée de couches successives de pâte et de matière grasse, dans laquelle la pâte comprend :
de la farine, et (par rapport à la farine) :
45 - 70 % en poids d'eau
5 - 12 % en poids de levure
0,1 - 4,0 % en poids d'émulsifiant
0,2 - 5 % en poids d'une pectine
0 - 10 % en poids d'une protéine, et
0 - 10 % en poids d'un amidon modifié,
le produit laminé ayant été partiellement levé, de sorte que le volume spécifique du produit congelé, partiellement levé, laminé est inférieur à 1,7 ml/g, plus particulièrement de 1,2 à 1,5 ml/g et contient 8-128, de préférence 16-60 couches de matière grasse et la contenance totale en matière grasse du produit (par rapport à la farine) représente 35 à 85 % du poids.

2. Pâte prête à cuire, congelée, partiellement levée, laminée, selon la revendication 1, dans laquelle la pectine est une pectine hautement méthoxy, en particulier dont au moins 50 % des groupes carboxylates sont convertis en groupes méthoxy.

3. Pâte prête à cuire, congelée, partiellement levée, laminée, selon les revendications 1 et 2, dans laquelle l'émulsifiant comprend :
. un agent de sapidité conférant de bonnes qualités de cuisson à la pâte,
. une lécithine,
. des esters de monoacides gras extraits du saccharose, dans lesquels les acides gras ont une longueur de chaîne de 12-20 atomes de carbone, ou
. des mélanges de ceux-ci.

4. Pâte prête à cuire, congelée, partiellement levée, laminée, selon les revendications 1 à 3, dans laquelle la pâte comprend en outre un ou plusieurs des ingrédients suivants : du sucre, de la matière grasse, des enzymes, plus particulièrement de la xylanase et/ou de la glucoamylase, et/ou de la transglutaminase, et/ou de l'amylase, de l'acide ascorbique et des agents réducteurs, plus particulièrement de la cystéine.

5. Pâte prête à cuire, congelée, partiellement levée, laminée, selon les revendications 1 à 4, dans laquelle le rapport entre la teneur en matière grasse (en % par rapport à la farine) et le nombre de couches de matière grasse se situe entre 0,6 et 1,5.

6. Pâte prête à cuire, congelée, partiellement levée, laminée, selon les revendications 1 à 5, pâte laminée donnant après cuisson dans un four à convection pendant 25 minutes à 175°C un produit d'un volume spécifique (v.s.) d'au moins 3,5 ml/g, de préférence au moins 5 ml/g et plus particulièrement au moins 6 ml/g.

7. Pâte prête à cuire, congelée, partiellement levée, laminée, selon les revendications 1 à 6, pâte laminée présentant après cuisson dans un four à convection pendant 25 minutes à 175°C une élasticité au four d'au moins 2,2, plus particulièrement d'au moins 4,5 ml/g.

8. Pâte prête à cuire, congelée, partiellement levée, laminée, selon les revendications 1 à 7, dans laquelle la pâte laminée est fourrée d'une garniture à teneur en eau réduite et/ou à teneur augmentée en agent de qualité alimentaire à pouvoir de rétention d'eau, la garniture consistant plus particulièrement en une crème, une marmelade ou une garniture de fruits.
